# EUROPÄISCHE PATENTSCHRIFT

(11) **EP 0 561 980 B1**
(45) Veröffentlichungstag und Bekanntmachung des Hinweises auf die Patenterteilung: **07.09.1994**
(21) Anmeldenummer: 92902026.1
(22) Anmeldetag: 16.12.1991
(51) Int. Cl.: B62D 25/08, B62D 29/00, B60R 16/02

(54) **KAROSSERIE EINES PERSONENKRAFTWAGENS MIT EINEM ELEKTRONIKGEHÄUSE**
COACHWORK OF A PASSENGER CAR WITH AN ELECTRONICS HOUSING
CARROSSERIE DE VOITURE PRIVEE AVEC UN LOGEMENT POUR COMPOSANTS ELECTRONIQUES

(30) Priorität: 20.12.1990 DE 4041016
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); LEDENDECKER, Ingo, D-8079 Buxheim (DE); KALDENBACH, Hans-J., D-7107 Neckarsulm (DE)
(74) Vertreter: Engelhardt, Harald
(86) Internationale Anmeldenummer: EP9102420
(87) Internationale Veröffentlichungsnummer: WO9211167

(56) Entgegenhaltungen:
- EP-A- 0 266 767
- WO-A-86/06334
- DE-A- 3 619 183
- DE-A- 3 732 087
- DE-A- 3 820 644
- DE-A- 3 824 857
- PATENT ABSTRACTS OF JAPAN, Band 13, Nr. 237 (M-833), 5. Juni 1989 & JP-A-1 047 640 (NISSAN) 22 February 1989

## Beschreibung

Die Erfindung betrifft eine Karosserie eines Personenkraftwagens mit einem Elektronikgehäuse nach dem Oberbegriff des Anspruchs 1.

Ein Elektronikgehäuse für ein Kraftfahrzeug dient zur Aufnahme von Elektronikbauteilen, insbesondere der zentralen Steuerelektronik, sowie ggfs. zur Verteilung und zur Aufnahme von Sicherungen. Bei herkömmlichen Fahrzeugen wird ein solches Elektronikgehäuse nachträglich in die in fertige Karosserie eingebaut. In einer bekannten, konkreten Ausführungsform (DE-C-36 19 183) wird das Elektronikgehäuse im Wasserkasten untergebracht. Dieser Wasserkasten ist ein durch Trennwände zwischen dem Fahrgastraum und dem Motorraum liegender, abgeschlossener Bereich. Durch die Anbringung des Elektronikgehäuses im Wasserkasten ist dieses weitgehend vor Verschmutzungen und ähnlichen, die Funktion der integrierten elektrischen Bauelemente beeinträchtigenden, Einflüssen geschützt.

Es wird somit karosserieseitig ein möglichst abgeschlossener Einbauraum als eine Art von Außengehäuse aus Blechteilen zur Verfügung gestellt, in den dann das eigentliche Elektronikgehäuse als Kunststoffgehäuse zur Aufnahme der Steuergeräte eingesetzt und befestigt wird. Der karosserieseitige Außenraum dient dabei nur zur Aufnahme und Abstützung des Elektronikgehäuses, wobei das Elektronikgehäuse selbst keine Karosseriefunktion übernimmt.

Es sind auch Ausführungen bekannt, wo das Elektronikgehäuse als Kunststoffgehäuse nicht im Wasserkasten, sondern in einem anderen, karosserieseitig zur Verfügung gestellten Gehäuseraum untergebracht ist. Ersichtlich ist hierbei wegen der Anordnung des Elektronikgehäuses in einem karosserieseitigen Außengehäuse ein hoher Materialeinsatz erforderlich. Nachteilig ist zudem der Aufwand für die Abdichtung und Entwässerung des karosserieseitigen Außengehäuses und der erforderliche Aufwand zur Befestigung des Elektronikgehäuses im Außengehäuse.

Da die Elektronikbauteile zum Teil eine hohe Leistungsaufnahme haben und eine entsprechend hohe Wärmeenergie abgeben, ist die Kühlung der Bauteile innerhalb der beiden ineinandergestellten Gehäuse problematisch. Es ist daher auch bekannt, durch einen eigenen Lüfter den Elektronikgehäuseinnenraum in aufwendiger Weise zu kühlen.

Zum Aufbau selbsttragender Karosserien werden im Tiefziehverfahren verformte Stahlbleche verwendet. Träger mit Hohlprofilen werden dabei jeweils aus wenigstens zwei tiefgezogenen und miteinander verschweißten Blechen hergestellt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Für Kleinserien ist eine solche Karosserieherstellung aufgrund der hohen erforderlichen Werkzeuginvestitionen sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

In einer weiter bekannten Karosserie aus Leichtmetall-Strangprofilen (Aluminium Journal, Herausgeber: Aluminium-Zentrale e.V., Düsseldorf, erschienen in Zeitschrift ALUMINIUM 64 (1988), Heft 9) ist ein vorderer Türpfosten (A-Pfosten) enthalten sowie eine Federbeinaufnahme, die gegenüber dem A-Pfosten weiter vorne und weiter zur Fahrzeugmitte hin liegt. Diese Federbeinaufnahme ist mit einem Hohlprofilträger als Federbeinträger etwa mit der Mitte bzw. in Höhe der Fensterbrüstung mit dem A-Pfosten verbunden.

Weiter enthalten Karosserien von Personenkraftwagen allgemein durch Blechteile begrenzte Radhäuser sowie über den Radhäusern an der Längsseite außen verlaufende Trägerteile als Kotflügelbänke zur Anbringung der Kotflügel.

Aufgabe der Erfindung ist es, eine gattungsgemäße Karosserie eines Personenkraftwagens mit einem Elektronikgehäuse so weiterzubilden, daß der Material- und Montageaufwand und damit insgesamt die Kosten verringert werden.

Diese Aufgabe wird mit den Merkmalen des Anspruchs 1 gelöst.

Gemäß Anspruch 1 ist die Federbeinaufnahme mit einem Federbeinträger etwa in der Mitte bzw. in Höhe der Fensterbrüstung mit dem vorderen Türpfosten (A-Pfosten) verbunden. Dadurch ergibt sich zwischen dem schräg von vorne her auf den A-Pfosten verlaufenden Federbeinträger, der Kotflügelbank und der Kontur des Radhauses ein von oben her offener, taschenförmiger Raum, der aufgrund der spitzwinkeligen Zusammenführung der Kotflügelbank und des Federbeinträgers von oben her gesehen etwa dreiecksförmig gestaltet ist. Die Wände dieses Raumes sind von einer Gehäusetasche gebildet, die mit den angrenzenden Karosserieteilen, insbesondere der Kotflügelbank und dem Federbeinträger, verbunden sind. Diese Gehäusetasche wird unmittelbar als Elektronikgehäuse zur Aufnahme von Elektronikbauteilen verwendet und wird bei entsprechender Ausführung mit einem Gehäusedeckel abgedeckt.

Bei der vorgeschlagenen Karosserie entfallen somit in dem Bereich zwischen dem Federbeinträger, der Kotflügelbank und dem Radhaus die üblichen Karosserieblechteile, so daß dort in der Karosserie vorerst eine offene Ausnehmung besteht. Diese Ausnehmung wird dann durch das Bauteil Elektronikgehäuse geschlossen. Das Elektronikgehäuse gehört damit zum Karosserierohbau-Umfang und ist Teil der Karosserie. Im Gegensatz dazu wird nach dem Stand der Technik das Elektronikgehäuse als separates Bauteil in einen in der fertigen Karosserie vorgesehenen Einbauraum erst während der Ausstattung des Fahrzeugs verbaut.

Damit entfällt vorteilhaft ein doppelter Materialeinsatz, der sich beim Stand der Technik durch die Vorgabe eines karosserieseitigen Einbauraums und das zusätzlich verbaute Elektronikgehäuse ergibt. Zudem wird der Montageaufwand geringer. Die Umwelteinflüsse auf die Elektronikbauteile sind bei nur einer umgebenden Gehäusewand leichter beherrschbar, da beispielsweise die Abdichtung und Entwässerung des karosserieseitigen Einbauraums entfällt. Da die Elektronikbauteile nicht doppelwandig umgeben sind, wird auch deren Kühlung einfacher durchführbar.

Bei entsprechender Dimensionierung der Festigkeit des Gehäuses trägt das Elektronikgehäuse, das durch die erfindungsgemäße Anbringung Teil der Tragstruktur ist, zur Erhöhung der Steifigkeit der Karosserie im kritischen Bereich der Federbeinaufnahme bei. Eine Dimensionierung ist in weiten Grenzen möglich, so daß die Forderungen an Festigkeit und Dehnung im Hinblick auf die Dauerfestigkeit und Crashanforderungen erfüllbar sind. Bei einer entsprechend festen Ausbildung des Deckels und dessen Verbindung zum Gehäuse ergibt sich auch hierüber ein zusätzlicher Steifigkeitsgewinn.

Nach Anspruch 2 bildet somit das Elektronikgehäuse vorteilhaft einen Wandbereich des Radhauses und/oder eines angrenzenden Wasserkastens.

An den Verbindungsstellen zu den übrigen Karosseriebauteilen sind am Elektronikgehäuse nach Anspruch 3 ggfs. umlaufende Stege als Schweiß- oder Klebeflansche angebracht, so daß eine feste und dauerhafte Verbindung im Rahmen der Tragstruktur der Karosserie herstellbar ist.

Die separaten Elektronikgehäuse nach dem Stand der Technik sind üblicherweise aus Kunststoff hergestellt. Durch die erfindungsgemäße Integration des Elektronikgehäuses in die Tragstruktur der Karosserie wird nach Anspruch 4 vorgeschlagen, das Elektronikgehäuse aus Metall, bevorzugt als Aluminium-Druckgußteil, herzustellen. Damit wird die für einen Teil der Tragstruktur der Karosserie erforderliche Steifigkeit und Festigkeit einfach realisierbar. Bei einem Druckgußteil können auf einfache Weise auch komplizierte Formen hergestellt werden, so daß die Geometrieanpassung an die weiteren Anschlußteile einfach durchführbar ist. Obwohl ein metallisches Elektronikgehäuse bevorzugt zu verwenden ist, kann auch ein Elektronikgehäuse mit entsprechend stabil gestalteten Kunststoffwänden verwendet werden.

Nach Anspruch 5 wird vorgeschlagen, Kühlrippen am Elektronikgehäuse mit anzuformen. Das Elektronikgehäuse kann dabei, insbesondere bei einer Ausführung in Metall, zugleich als Kühlkörper verwendet werden. Die Elektronikbauteile sind dazu bevorzugt mit großen Anlageflächen an der Innenseite der Gehäusewände anzubringen, wobei die Kühlrippen an der Außenseite abstehen. Damit wird üblicherweise eine ausreichende Kühlung ohne weitere Zusatzmaßnahmen, wie zusätzliche Gehäuselüfter, etc., erreicht.

Nach Anspruch 7 wird der obere Rand des Elektronikgehäuses gegenüber den angrenzenden Karosseriebauteilen als nach oben abstehender, umlaufender Steg in der Form eines Kragens ausgeführt. Dadurch ist der Deckel und die Deckeldichtung gegenüber den angrenzenden Karosseriebauteilen nach oben abgehoben, so daß anfließendes Wasser nur am umlaufenden Steg ansteht und nicht in den Bereich der Deckeldichtung gelangt.

Die Abdichtung ist somit einfach und sicher durchführbar.

Kabel werden zur Abdichtung in an sich bekannter Weise über Gummitüllen in das Elektronikgehäuse eingeführt. Nach Anspruch 8 ist es dabei vorteilhaft, Einrundungen im Steg bzw. im Kragen von oben her vorzusehen, in die die Gummitüllen mit den durchgeführten Kabeln von oben her eingeschoben werden, so daß ein Durchfädeln entfällt.

Der umlaufende Steg eignet sich auch zur Anbringung von Materialverdickungen als Versteifungen nach Anspruch 9.

Am nach oben abstehenden Steg ist nach Anspruch 10 auch Platz für eine geeignete Befestigungsmöglichkeit für Federklammern zur lösbaren Deckelbefestigung.

Der Gehäusedeckel kann in einer preiswerten Lösung als Abdeckkappe aus Kunststoff ausgeführt sein. Nach Anspruch 11 ist es aber je nach den Gegebenheiten vorteilhaft, auch den Gehäusedeckel als Aluminium-Druckgußteil herzustellen, da dann auch der Deckel mit zur Aussteifung beiträgt.

In einer besonders bevorzugten Ausführungsform ist das Elektronikgehäuse mit einer Öffnung zum angrenzenden Fahrzeuginnenraum hin offen. Eine solche Öffnung liegt beispielsweise hinter dem Armaturenbrett und ist somit nicht unmittelbar sichtbar. Durch diese Öffnung sind einerseits die Kabelanschlüsse zu Funktionselementen in der Armaturentafel einfach durchführbar und andererseits wird die Innenraumatmosphäre in das Elektronikgehäuse hinein fortgesetzt. Dadurch wird eine gute Durchlüftung des Elektronikgehäuses mit der trockenen Innenraumluft erreicht, so daß keine Kondenswasserbildung erfolgt und die Kühlung der Elektronikbauelemente verbessert wird. Weitere Kühlmaßnahmen durch eine zusätzliche Luftumwälzung im Elektronikgehäuse können entfallen.

Anhand eines Ausführungsbeispiels wird die Erfindung mit weiteren Merkmalen, Einzelheiten und Vorteilen näher erläutert.

Es zeigen
- Fig. 1: eine Draufsicht auf eine Karosserie eines Personenkraftwagens im Bereich einer Federbeinaufnahme,
- Fig. 2: einen Längsschnitt entlang der Linie A-A aus Fig. 1 durch ein Elektronikgehäuse,
- Fig. 3: einen Längsschnitt durch ein Elektronikgehäuse mit weiteren Einzelheiten.

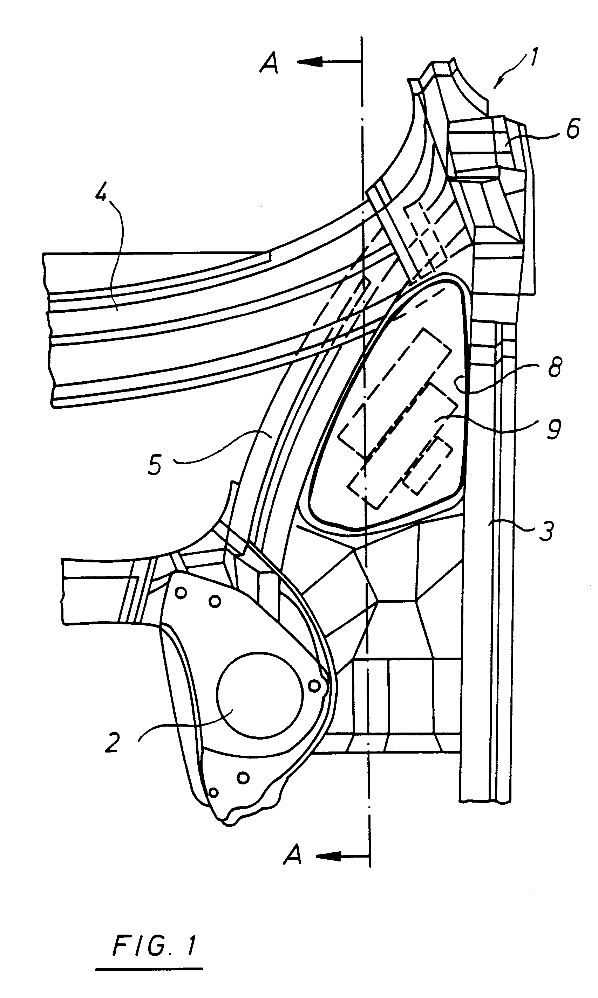

In Fig. 1 ist die Draufsicht auf einen Karosseriebereich dargestellt mit einem vorderen Türpfosten als A-Pfosten 1 mit einer Federbeinaufnahme 2, die gegenüber dem A-Pfosten 1 weiter vorne und weiter zur Fahrzeuglängsmitte hin liegt, mit einer Kotflügelbank 3 und einem Querträger 4. Die Federbeinaufnahme 2 ist mit einem Hohlprofilträger als Federbeinträger 5 etwa in Höhe der Fensterbrüstung mit dem A-Pfosten 1 verbunden. An diesem Knotenpunkt 6 sind auch die Kotflügelbank 3 und der Querträger 4 angeschlossen.

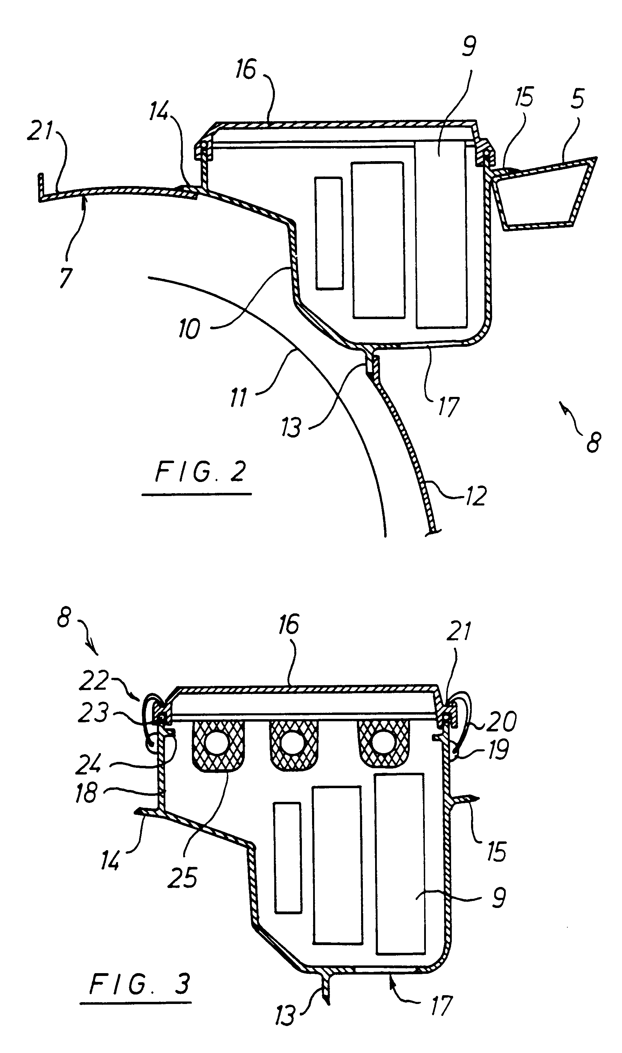

Dadurch ergibt sich in der Draufsicht nach Fig. 1 ein dreiecksförmiger, nach oben offener, taschenförmiger Raum zwischen dem Federbeinträger 5 und der Kotflügelbank 3, der nach unten durch die Kontur des Radhauses 7 begrenzt ist (siehe Fig. 2).

Die Wände dieses Raumes werden von einer Gehäusetasche als Elektronikgehäuse 8 gebildet. In dieses Elektronikgehäuse 8 sind Elektronikbauteile 9 eingesetzt und befestigt. Aus dem Längsschnitt in Fig. 2 ist zu ersehen, daß ein Teil des Radhauses durch eine untere Wand 10 des Elektronikgehäuses 8 gebildet ist. Der Kreisbogen 11 stellt schematisch einen Teil der Umfangskontur eines Reifens dar.

Das Elektronikgehäuse 8 ist mit angrenzenden Blechen 11, 12 des Radhauses über Schweißflansche 13, 14 verbunden. Das Elektronikgehäuse 8 ist zudem auch mit dem angrenzenden Federbeinträger 5 über einen weiteren Schweißflansch 15 sowie mit der Kotflügelbank 3 verbunden. Damit stellt das Elektronikgehäuse einen Teil der Tragstruktur der Karosserie dar und ist insgesamt in den Karosserieaufbau integriert.

Das Elektronikgehäuse 8 ist von oben her mit einem Gehäusedeckel 16 dicht verschlossen. Das Elektronikgehäuse 8 und der Gehäusedeckel 6 sind Aluminium-Druckgußteile.

An der Unterseite des Elektronikgehäuses 8 ist eine Öffnung 17 angebracht, durch die der Gehäuseinnenraum mit dem angrenzenden Fahrgastraum verbunden ist. Damit wird die Fahrgastatmosphäre mit ihrer relativ trockenen Innenluft auch in den Gehäuseinnenraum übertragen. Zudem können durch die Öffnung 17 Anschlußkabel vom Fahrgastinnenraum bzw. hinter der Armaturentafel in das Elektronikgehäuse 8 auf einfache Weise ohne aufwendige Durchführungen und Dichtungen eingeführt werden.

In Fig. 3 ist das Elektronikgehäuse nach Fig. 2 mit weiteren Ausgestaltungen und Einzelheiten näher dargestellt. Es sind auch hier die für den Anschluß dienenden Schweißflansche 13, 14, 15 zu erkennen sowie die Elektronikbauteile 9 und der Deckel 16.

Über den oberen Schweißflanschen 14, 15 ist das Elektronikgehäuse 8 durch einen umlaufenden Steg 18 in der Form eines Kragens nach oben verlängert. An diesem Steg, der oberhalb des Wasserlaufs, der in Höhe der Schweißflansche 14, 15 liegt, sind Befestigungen 19 für Federklammern 20 zur lösbaren Halterung des Deckels 16 angebracht. Die schwenkbaren Federklammern 20 greifen mit oberen, gebogenen Enden in Ausnehmungen 21 am Deckelrand 22 ein.

Der Deckelrand 22 ist nach unten doppelwandig offen ausgeführt mit einem eingelegten Dichtungsgummi 23, der beim Schließen des Deckels 16 mit Hilfe der Federklammern 20 auf den oberen Rand des Elektronikgehäuses 8 dicht aufgepreßt wird.

Im oberen Bereich des Steges 18 ist zudem eine umlaufende, nach innen weisende Verstärkungsrippe 24 angeformt.

Am Steg 18 sind von oben her schlitzförmige Einrundungen 25 eingeformt, in die Gummitüllen 25 zur dichten Einführung von Kabeln aus dem Motorraum bzw. aus dem Wasserkasten eingesteckt sind.

Das als Aluminium-Druckgußteil hergestellte Elektronikgehäuse 8 kann auch nach außen abstehende, angeformte (nicht dargestelle) Kühlrippen aufweisen.

## Patentansprüche

1. Karosserie eines Personenkraftwagens mit einem Elektronikgehäuse,
mit einem vorderen Türpfosten (A-Pfosten),
mit einem Radhaus,
mit einer Kotflügelbank und
mit einer Federbeinaufnahme, die gegenüber dem A-Pfosten weiter vorne und weiter zur Fahrzeuglängsmitte hin liegt,
dadurch gekennzeichnet,
daß die Federbeinaufnahme (2) mit einem Hohlprofilträger als Federbeinträger (5) etwa in der Mitte bzw. in Höhe der Fensterbrüstung mit dem A-Pfosten (1) verbunden ist, wobei sich zwischen dem Federbeinträger (5), der Kotflügelbank (3) und der Kontur des Radhauses (7) ein von oben her offener, taschenförmiger Raum ergibt und
daß die Wände dieses Raumes von einer Gehäusetasche als Elektronikgehäuse (8) gebildet sind, die mit den angrenzenden Karosserieteilen, insbesondere der Kotflügelbank (3) und dem Federbeinträger (5) fest verbunden sind, so daß das Elektronikgehäuse (8) einen Teil der Tragstruktur der Karosserie bildet und daß das Elektronikgehäuse (8) mit einem Gehäusedeckel (16) abgedeckt ist.

2. Karosserie nach Anspruch 1, dadurch gekennzeichnet, daß Wandbereiche (10) des Elektronikgehäuses (8) einen Wandbereich des Radhauses (7) und/oder eines angrenzenden Wasserkastens bilden.

3. Karosserie nach Anspruch 1 oder 2, dadurch gekennzeichnet, daß am Elektronikgehäuse (8) an den Verbindungsstellen Stege als Schweiß- oder Klebeflansche (13, 14, 15) angebracht sind.

4. Karosserie nach einem der Ansprüche 1 bis 3, dadurch gekennzeichnet, daß das Elektronikgehäuse (8) aus Metall, bevorzugt als Aluminium-Druckgußteil, hergestellt ist.

5. Karosserie nach einem der Ansprüche 1 bis 4, dadurch gekennzeichnet, daß Kühlrippen am Elektronikgehäuse (8) angeformt sind.

6. Karosserie nach einem der Ansprüche 1 bis 5, dadurch gekennzeichnet, daß Befestigungsteile für die Elektronikbauteile (9) im Elektronikgehäuse (8) angeformt und integriert sind.

7. Karosserie nach einem der Ansprüche 1 bis 6, dadurch gekennzeichnet, daß der obere Rand des Elektronikgehäuses (8) als umlaufender, nach oben abstehender Steg (18) in der Form eines Kragens ausgeführt ist.

8. Karosserie nach Anspruch 7, dadurch gekennzeichnet, daß im Steg (18) von oben her Einrundungen zur Aufnahme von Gummitüllen (25) vorgesehen sind.

9. Karosserie nach Anspruch 7 oder 8, dadurch gekennzeichnet, daß am Steg (18) Materialverdickungen als Versteifungen (Verstärkungsrippen 24) vorgesehen sind.

10. Karosserie nach einem der Ansprüche 7 bis 9, dadurch gekennzeichnet, daß am Steg (18) Befestigungsteile (19) für Federklammern (20) zur lösbaren Deckelbefestigung angebracht sind.

11. Karosserie nach einem der Ansprüche 1 bis 10, dadurch gekennzeichnet, daß der Gehäusedeckel (16) als Aluminium-Druckgußteil ausgeführt ist.

12. Karosserie nach einem der Ansprüche 1 bis 11, dadurch gekennzeichnet, daß das Elektronikgehäuse (8) mit einer Öffnung (17) zum angrenzenden Fahrzeuginnenraum hin offen und mit diesem verbunden ist.

## Claims

1. Bodyshell for a passenger car with a housing for electronic equipment,
with a front door post (A-post),
with a wheel house,
with a wing bar and
with a spring strut locator, which in relation to the A-post is situated further to the front and further to the centre of the length of the vehicle,
characterised in that
the spring strut locator (2) is joined to the A-post (1), more or less in the middle, or level with the window breast, by a hollow profile member acting as a spring strut member (5), to produce a pocket-type space, open from the top, between the spring strut member (5), the wing bar (3) and the outline of the wheel house (7), and
that the walls of said space are formed by a housing pocket acting as the electronic equipment housing (8), said walls being permanently joined to the adjoining parts of the bodyshell, in particular to the wing bar (3) and the spring strut member (5), with the result that the electronic equipment housing (8) forms a part of the load-bearing structure and that the electronic equipment housing (8) is covered by a a housing lid (16).

2. Bodyshell according to claim 1, characterised in that wall areas (10) of the electronic equipment housing (8) form a wall region of the wheel house (7) and/or of an adjoining radiator tank.

3. Bodyshell according to claim 1 or 2, characterized in that webs to act as welding or bonding flanges (13, 14, 15) are incorporated on the electronic equipment housing (8) at the connection points.

4. Bodyshell according to any of claims 1 to 3, characterised in that the electronic equipment housing (8) is made of metal, preferably in the form of a pressure-diecast aluminium part.

5. Bodyshell according to any of claims 1 to 4, characterised in that cooling fins are formed on the electronic equipment housing (8).

6. Bodyshell according to any of claims 1 to 5, characterized in that fixing parts for the electronic components (9) are formed on the inside of the electronic equipment housing (8) and integrated therewith.

7. Bodyshell according to any of claims 1 to 6, characterized in that the top edge of the electronic equipment housing (8) is constructed as an upwardly raised web (18) in the form of a collar running all the way round.

8. Bodyshell according to claim 7, characterized in that rounded areas to accommodate rubber bushes (25) are provided in the web (18) from the top.

9. Bodyshell according to claim 7 or 8, characterized in that areas of thicker material are provided on the web (18) to act as reinforcements (strengthening ribs 24).

10. Bodyshell according to any of claims 7 to 9, characterized in that fixing parts (19) are incorporated on the web (18) for spring clips (20) for fastening the lid in a removable manner.

11. Bodyshell according to any of claims 1 to 10, characterised in that the housing lid (16) is in the form of a pressure-diecast aluminium part.

12. Bodyshell according to any of claims 1 to 11, characterised in that the electronic equipment housing (8) is open towards the adjacent vehicle interior by an opening (17) and is connected to said vehicle interior.

## Revendications

1. Carrosserie d'une voiture particulière équipée d'un boîtier électronique et comportant
un montant de porte avant (montant A),
un passage de roue
une monture d'aile et
un logement pour jambe à ressort qui, par rapport au montant A, est situé plus en avant et plus près du plan médiant longitudinal de la voiture,
caractérisée
en ce que le logement (2) pour jambe à ressort est relié au montant A (1), à peu près au milieu ou à la hauteur de l'appui de fenêtre, par un poutrelle profilée creuse constituant le support (5) de jambe à ressort, un espace en forme de poche, ouvert vers le haut, étant formé entre le support (5) de jambe à ressort, la monture d'aile (3) et le contour du passage de roue (7),
en ce que les parois de cet espace sont formées par une poche-boîtier constituant le boîtier électronique (8) et sont fixées rigidement aux parties voisines de la carrosserie, en particulier à la monture d'aile (3) et au support (5) de jambe à ressort, d'où il résulte que le boîtier électronique (8) constitue une partie de la structure porteuse de la carrosserie, et
en ce que le boîtier électronique (8) est fermé par un couvercle (16).

2. Carrosserie selon la revendication 1, caractérisée en ce que des régions (10) de la paroi du boîtier électronique (8) constituent une région de la paroi du passage de roue (7) et/ou d'une boîte à eau contiguë.

3. Carrosserie selon la revendication 1 ou 2, caractérisée en ce qu'il est formé sur le boîtier électronique (8), au niveau des zones d'assemblage, des nervures destinées à servir de brides de soudage ou de collage (13, 14, 15).

4. Carrosserie selon l'une quelconque des revendications 1 à 3, caractérisée en ce que le boîtier électronique (8) est fabriqué en métal, de préférence sous forme de pièce coulée sous pression en aluminium.

5. Carrosserie selon l'une quelconque des revendications 1 à 4, caractérisée en ce que des ailettes de refroidissement sont formées sur le boîtier électronique (8).

6. Carrosserie selon l'une quelconque des revendications 1 à 5, caractérisée en ce que des éléments de fixation pour les composants électroniques (9) sont formés et intégrés dans le boîtier électronique (8).

7. Carrosserie selon l'une quelconque des revendications 1 à 6, caractérisée en ce que le bord supérieur du boîtier électronique (8) est réalisé sous forme d'une partie périphérique saillante (18) se dressant vers le haut, à la manière d'un collet.

8. Carrosserie selon la revendication 7, caractérisée en ce qu'il est prévu, dans la partie saillante (18), des encoches arrondies, ouvertes vers le haut, pour recevoir des passe-câbles (25) en caoutchouc.

9. Carrosserie selon la revendication 7 ou 8, caractérisée en ce qu' il est prévu, sur la partie saillante (18), des surépaisseurs de matière servant de renforts (nervures de renforcement 24).

10. Carrosserie selon l'une quelconque des revendications 7 à 9, caractérisée en ce qu'il est posé, sur la partie saillante (18), des éléments de fixation (19) pour des agrafes à ressort (20) destinées à la fixation détachable du couvercle.

11. Carrosserie selon l'une quelconque des revendications 1 à 10, caractérisée en ce que le couvercle (16) du boîtier est réalisé sous forme de pièce coulée sous pression en aluminium.

12. Carrosserie selon l'une quelconque des revendications 1 à 11, caractérisée en ce que le boîtier électronique (8) est ouvert, par une ouverture (17), sur l'espace intérieur contigu de la voiture et est en communication avec lui.
